# EUROPÄISCHE PATENTSCHRIFT

(11) **EP 0 574 851 B1**
(45) Veröffentlichungstag und Bekanntmachung des Hinweises auf die Patenterteilung: **13.05.1998**
(21) Anmeldenummer: 93109445.2
(22) Anmeldetag: 14.06.1993
(51) Int. Cl.: E05D 15/06, E05F 15/14, B65G 19/02

(54) **Raumtrennwand aus verfahrbaren Wandelementen**
Partitioning wall built of movable panel units
Paroi de séparation constituée d'éléments déplaçables

(30) Priorität: 19.06.1992 DE 9208164 U; 19.06.1992 DE 4219977
(43) Veröffentlichungstag der Anmeldung: 22.12.1993
(73) Patentinhaber: Hüppe Form Sonnenschutz- und Raumtrennsysteme GmbH, D-26133 Oldenburg (DE)
(72) Erfinder: Hobbiebrunken, Klaus, D-2910 Westerstede (DE); Kalischewski, Rolf, D-2887 Elsfleth (DE); Brunkhorst, Rolf, D-2900 Oldenburg (DE); Klein, Werner, D-2940 Wilhelmshaven (DE); Kappe, Bernd-Jürgen, D-2900 Oldenburg (DE)
(74) Vertreter: Eisenführ, Speiser & Partner

(56) Entgegenhaltungen:
- WO-A-89/07185
- DE-B- 2 844 022
- DE-C- 4 026 098
- DE-U- 9 204 436
- US-A- 3 454 142
- US-A- 4 642 947

## Beschreibung

Die Erfindung betrifft eine Raumtrennwand aus verfahrbaren und mit ihren senkrechten Stirnseiten in dichtende Anlage aneinander bzw. an Abschlußelemente bringbaren Wandelementen, die mit Hilfe von Tragorganen entlang einer ersten Schiene und mindestens entlang einer zweiten Schiene bewegbar sind, wobei die erste Schiene von der zweiten Schiene abzweigt und der ersten Schiene ein entlang dieser bewegbares und antreibbares Förderelement zugeordnet ist, an dem Mitnehmer befestigt sind, die zum Transport eines Wandelementes entlang der ersten Schiene in lösbaren Eingriff mit dessen Tragorganen bringbar sind, und wobei für den Übergang eines Wandelementes zwischen der ersten und der zweiten Schiene jeder Mitnehmer zu einem im Abzweigpunkt befindlichen Tragorgan des Wandelementes hin bzw. von diesem weg verschwenkbar ist, um in Eingriff mit diesem Tragorgan zu gelangen bzw. sich von diesem zu lösen, wozu die Mitnehmer jeweils einen Eingriffsabschnitt aufweisen.

Eine solche Raumtrennwand ist in der US-A-4 642 947 beschrieben, die den nächstkommenden Stand der Technik bildet, von der die Erfindung ausgeht.

Bei diesem Stand der Technik werden Wandelemente über drehbare Schienenelemente, die ähnlich wie verstellbare Weichen funktionieren, zwischen ersten und zweiten Schienen verfahren. Dabei sind zwei scheibenförmige Mitnehmer zum sicheren Hinein- und Herausbewegen der Tragorgane der Wandelemente in die und aus den drehbaren Weichenelementen vorgesehen. Am Rand jedes scheibenförmigen Mitnehmers ist eine Aussparung ausgebildet, die an ihren beiden Enden jeweils eine Einkerbung bildet, die die Funktion eines Eingriffsabschnittes hat. Da sich die Aussparung entlang des Umfanges des scheibenförmigen Mitnehmers über einen Winkel von 90° erstreckt, beträgt der Winkelabstand zwischen den an den beiden Enden der Aussparung gebildeten beiden Eingriffsabschnitten ebenfalls 90°. Befinden sich nun die scheibenförmigen Mitnehmer in der Stellung für den Eingriff mit den Tragbolzen eines Trennwandelementes im Abzweigpunkt, so müssen die scheibenförmigen Mitnehmer mit Hilfe eines Gestänges und einer Pneumatik stets so gedreht werden, daß derjenige Eingriffsabschnitt, der mit dem entsprechenden Tragbolzen in Eingriff gelangt, in Richtung der ersten Schiene (Parkschiene) oder in deren Gegenrichtung weist. Dann weist der andere - unbenutzte - Eingriffsabschnitt in Richtung der zweiten Schiene (Hauptschiene), jedoch befindet sich dieser Eingriffsabschnitt nicht in einer Position für den Eingriff mit dem Tragbolzen. Soll nun jener andere Eingriffsabschnitt in Eingriff mit dem Tragbolzen gebracht werden, so muß der scheibenförmige Mitnehmer entsprechend um 90° verdreht werden, was zur Folge hat, daß der Eingriffsabschnitt nicht mehr in Richtung der zweiten Schiene (Hauptschiene), sondern in Richtung der ersten Schiene (Parkschiene) bzw. in deren entgegengesetzter Richtung weist.

Somit ist bei diesem Stand der Technik ein Verfahren des Trennwandelementes mit seinem Tragbolzen in einen der beiden Eingriffsabschnitte des Mitnehmers nicht möglich, da der Tragbolzen dann gegen die den entsprechenden Eingriffsabschnitt am Ende der Aussparung übergreifende Nase stoßen würde. Umgekehrt ist auch ein zwangloses Lösen des Tragbolzens durch einfaches Wegfahren des Trennwandelementes entlang der zweiten Schiene (Hauptschiene) nicht möglich, da der Tragbolzen von der sich quer zur Richtung der zweiten Schiene (Hauptschiene) erstreckenden Nase festgehalten wird.

Für den Eingriff mit dem im Abzweigpunkt befindlichen Tragbolzen muß der Mitnehmer vielmehr in einer bestimmten Drehstellung so herangefahren werden, daß der Tragbolzen an seiner zur ersten Schiene (Parkschiene) weisenden Seite von dem einen Eingriffsabschnitt in dem der ersten Schiene (Parkschiene) näher liegenden Ende der Aussparung umschlossen wird. Anschließend muß der Mitnehmer um 90° gedreht werden, wodurch der eine Eingriffsabschnitt wieder vom Tragbolzen gelöst wird und nun der andere Eingriffsabschnitt an dem von der ersten Schiene (Parkschiene) entfernt liegenden Ende der Aussparung den Tragbolzen an seiner gegenüberliegenden Seite umfaßt, so daß dann der Tragbolzen vom Mitnehmer in Richtung des Parkmagazins entlang der ersten Schiene mitgenommen wird. Zum Lösen des Tragbolzens durch Wegfahren des Trennwandelementes entlang der zweiten Schiene (Hauptschiene) findet dann der Bewegungsablauf in umgekehrter Weise statt.

Nach alledem erfolgt der Bewegungsablauf beim Stand der Technik für den Übergang der Trennwandelemente von der ersten Schiene (Parkschiene) auf die zweite Schiene (Hauptschiene) in komplizierter und diskontinuierlicher Weise, was die Handhabung der bekannten Raumtrennwand umständlich macht und somit von erheblichem Nachteil ist.

Aufgabe der Erfindung ist es deshalb, eine Anordnung zu schaffen, die einen unkomplizierten und kontinuierlichen Übergang der Wandelemente zwischen den ersten und zweiten Schienen bei kontinuierlichem Antrieb des die Mitnehmer tragenden Förderelementes gestattet.

Diese Aufgabe wird erfindungsgemäß dadurch gelöst, daß bei einer Raumtrennwand der eingangs genannten Art die Mitnehmer am Förderelement derart angeordnet sind, daß stets der Eingriffsabschnitt desjenigen Mitnehmers, der sich in der Stellung für den Eingriff mit einem Tragorgan eines Wandelementes im Abzweigpunkt befindet, in Richtung der zweiten Schiene weist und bei Antrieb des Förderelementes für den Übergang eines Wandelementes von der ersten auf die zweite Schiene jeder Mitnehmer mit seinem Eingriffsabschnitt von einem im Abzweigpunkt befindlichen Tragorgan eines Wandelementes weg und dabei aus der Bewegungsbahn dieses Wandelementes entlang der zweiten Schiene heraus verschwenkbar ist, um sich von diesem zu lösen und die nach dem Übergang von der ersten auf die zweite Schiene anschließende Bewegung des Wandelementes entlang der zweiten Schiene nicht zu behindern.

Die erfindungsgemäße Konstruktion hat den Vorteil, daß das entsprechende Trennwandelement durch bloßes Verfahren entlang der zweiten Schiene in bzw. außer Eingriff mit bzw. von dem Mitnehmer gelangt, so daß ein einfacher, kontinuierlicher Übergang des Trennwandelementes zwischen den ersten und zweiten Schienen bei kontinuierlichem Antrieb des die Mitnehmer tragenden Förderelementes realisierbar ist. Dabei werden erfindungsgemäß die Mitnehmer aus der Bewegungsbahn des gerade von der ersten auf die zweite Schiene verfahrenen Wandelementes entlang der zweiten Schiene herausgeschwenkt, um die nach dem Übergang vom ersten auf die zweite Schiene anschließende Bewegung des Wandelementes entlang der zweiten Schiene nicht zu behindern. Aufgrund der erfindungsgemäßen Anordnung wird außerdem ein Abschalten des Förderelementes überflüssig, während ein Mitnehmer in Eingriff mit einem im Abzweigpunkt befindlichen Tragorgan eines Wandelementes gebracht oder von diesem gelöst wird. Vielmehr kann aufgrund der erfindungsgemäßen verschwenkbaren Anordnung der Mitnehmer die Bewegung des Förderelementes fortgesetzt werden, was ebenfalls zu einem stetigen Übergang eines Wandelementes zwischen der ersten und der zweiten Schiene beiträgt.

Vorzugsweise weist der Bewegungsweg des Förderelementes vor dem Abzweigpunkt einen von diesem wegführenden Kurvenabschnitt auf und sind die Mitnehmer in einer bestimmten Stellung gegenüber dem Förderelement an diesem fixiert. Bei dieser Ausführung wird also die Schwenkbewegung der Mitnehmer vom Förderelement selbst bewirkt, wenn dieses den Kurvenabschnitt seines Bewegungsweges durchläuft. Zweckmäßigerweise weist der Bewegungsweg einen parallel zur ersten Schiene verlaufenden Abschnitt auf, an dem sich der Kurvenabschnitt anschließt. Soll ein Wandelement entlang der ersten Schiene verfahren werden, befindet sich ein Mitnehmer in unlösbarem Eingriff mit einem Tragorgan dieses Wandelementes, solange dieser Mitnehmer vom Förderelement entlang des parallelen Abschnittes des Bewegungsweges bewegt wird.

Bei einer gegenwärtig besonders bevorzugten Weiterbildung besitzen die Mitnehmer jeweils einen Eingriffsabschnitt, der an der vom Kurvenabschnitt des Bewegungsweges des Förderelementes weggerichteten Seite der Mitnehmer vorgesehen ist. Dadurch ist in besonders einfacher Weise die Herstellung oder das Lösen eines Eingriffes mit dem im Abzweigpunkt befindlichen Tragorgan eines Wandelementes möglich.

Eine besonders einfache und zugleich wirkungsvolle Konstruktion wird dadurch erzielt, daß die Mitnehmer als hakenförmige Elemente ausgebildet sind, deren Eingriffsabschnitte als konkave Aussparungen geformt sind, um einen hierfür vorgesehenen Abschnitt der Tragorgane lösbar umfassen zu können.

Vorzugsweise sind die Mitnehmer mit ihrem einen Ende am Förderelement befestigt und an ihrem anderen freien Ende mit dem Eingriffsabschnitt versehen. Bei einer derartigen Anordnung läßt sich die Schwenkbewegung der Mitnehmer für den Eingriff bzw. zum Lösen gerade bei relativ kleinen Kurvenradien realisieren. Unter diesem Gesichtspunkt ist es auch günstig, die Mitnehmer so anzuordnen, daß sie mit ihrem freien Ende in die Bewegungsrichtung des Förderelementes zum Transport der Wandelemente von der ersten zur zweiten Schiene weisen. Außerdem ergibt sich eine besonders platzsparende Konstruktion und Anordnung der Mitnehmer dann, wenn sie als längliche Flachelemente ausgebildet sind.

Zweckmäßigerweise ist das Förderelement ein Endloselement, welches vorzugsweise vor dem Abzweigpunkt um eine Umlenkrolle umläuft, um die Schwenkbewegung der daran befestigten Mitnehmer zu erzeugen.

Im allgemeinen ist der zweiten Schiene ebenfalls ein entlang dieser bewegbares und antreibbares zweites Förderelement zugeordnet, an dem ebenfalls Mitnehmer befestigt sind, die zum Transport eines Wandelementes entlang der zweiten Schiene in lösbaren Eingriff mit dessen Tragorganen bringbar sind. Eine solche Anordnung ist aus der DE 40 26 098 A1 bekannt. Bei einer solchen Ausführung ist es von Vorteil, wenn die Mitnehmer des ersten Förderelementes und die Mitnehmer des zweiten Förderelementes so angeordnet und ausgebildet sind, daß jeweils ein Mitnehmer des ersten Förderelementes und ein Mitnehmer des zweiten Förderelementes gleichzeitig in Eingriff mit einem im Abzweigpunkt befindlichen Tragorgan eines Wandelementes bringbar sind, um somit einen besonders gleichmäßigen Übergang des Wandelementes zwischen der ersten und der zweiten Schiene zu ermöglichen. Damit sich die Mitnehmer des ersten und des zweiten Förderelementes beim Übergang des Wandelementes zwischen der ersten und der zweiten Schiene nicht gegenseitig stören, sind zweckmäßigerweise die Mitnehmer des ersten Förderelementes und die Mitnehmer des zweiten Förderelementes in unterschiedlicher Höhe angeordnet.

Gemäß einer weiteren besonders bevorzugten Ausführung sind die Tragorgane der Wandelemente mit Mitnehmerstiften versehen, mit denen die Mitnehmer in lösbaren Eingriff bringbar sind. Vorzugsweise sind die Mitnehmerstifte zylindrisch geformt und die Eingriffsabschnitte als entsprechende etwa halbkreisförmige Aussparungen ausgebildet.

Wenn ein Magazin zum Parken der Wandelemente verwendet wird, wie dies beispielsweise auch bei der Raumtrennwand gemäß der DE 40 26 098 A1 der Fall ist, enthält das Magazin die erste Schiene. Eine bevorzugte Ausführung, bei welcher das Magazin zusätzlich eine ebenfalls von der zweiten Schiene abzweigende dritte Schiene enthält, die Wandelemente jeweils mit zwei Tragorganen versehen sind, die erste Schiene und die dritte Schiene einen Abstand voneinander aufweisen, der dem Abstand der beiden Tragbolzen der Wandelemente entspricht, und der dritten Schiene ein Förderelement mit daran befestigten Mitnehmern zugeordnet ist, zeichnet sich dadurch aus, daß das Förderelement und die Mitnehmer in gleicher Weise wie das Förderelement und die zugehörigen Mitnehmer für die erste Schiene angeordnet und ausgebildet sind.

Zweckmäßigerweise bilden jeweils ein Mitnehmer der ersten Schiene und ein Mitnehmer der zweiten Schiene ein Paar mit im wesentlichen dem gleichen Abstand zur zweiten Schiene.

Die Mitnehmer eines Paares können in gleicher Richtung verschwenkbar sein. Diese Ausführung hat den Vorteil, daß bei hakenförmiger Ausbildung der Mitnehmer die Tragorgane aus den Mitnehmern herausgeschoben werden können, wenn die Wandelemente nach Überführung von der ersten auf die zweite Schiene entlang letzterer verfahren werden sollen.

Alternativ können die Mitnehmer eines Paares auch in entgegengesetzter Richtung verschwenkbar sein. Diese gegenläufige Arbeitsweise hat den Vorteil, daß die Mitnehmer eine zentrierende Kraft auf die Tragorgane eines von der ersten und der dritten Schiene auf die zweite Schiene verfahrenen Wandelementes ausüben, um das Wandelement korrekt in der zweiten Schiene justieren zu können. Allerdings muß bei dieser Ausführung stets darauf geachtet werden, daß die Mitnehmer im wesentlichen vollständig aus dem Bereich der zweiten Schiene heraus verschwenkt werden, bis das Wandelement entlang der zweiten Schiene ungehindert verfahren werden kann.

Gemäß einem weiteren Aspekt betrifft die Erfindung eine Raumtrennwand aus verfahrbaren Wandelementen, die mittels einer Antriebseinrichtung entlang einer Führungsschiene mit ihren senkrechten Stirnseiten in Anlage aneinander bewegbar sind, wobei die Antriebseinrichtung ein in oder entlang der Führungsschiene angeordnetes antreibbares Endloselement aufweist, mit dem die Wandelemente in Eingriff bringbar sind. Auch wenn die aus der DE 40 26 098 Al bekannte Vorrichtung, welche insbesondere einen einfachen und raschen Transport der Wandelemente auch übereck zuläßt, sich in der Praxis gut bewährt hat, besteht Bedarf an einer Vereinfachung der Antriebseinrichtung insbesondere für diejenigen Ausführungen von Raumtrennwänden, bei denen ein Transport von Wandelementen übereck nicht erforderlich ist. Daher ist eine solche Raumtrennwand so ausgebildet, daß sich das Endloselement nur entlang eines begrenzten Abschnittes der Führungsschiene erstreckt und ein Wandelement nur entlang dieses Abschnittes antreibt und daß die Wandelemente mit Verbindungsmitteln zur lösbaren, stirnseitigen Verbindung miteinander versehen sind.

Im Gegensatz zum Stand der Technik, bei welchem sich die Wandelemente über die gesamte Strecke der Führungsschiene in Eingriff mit der Antriebseinrichtung befinden, bewegt das erfindungsgemäß ausgestaltete Endloselement jedes Wandelement nur entlang eines begrenzten Abschnittes der Führungsschiene. Dadurch ist es möglich, die Antriebseinrichtung baulich einfacher und somit auch preiswerter auszuführen, was sich nicht nur positiv auf die Herstellungskosten der gesamten Raumtrennwand auswirkt, sondern auch auf den im Betrieb erforderlichen Wartungsaufwand, der aufgrund der Vereinfachung der Antriebseinrichtung reduziert werden kann.

Obwohl das Endloselement nur entlang eines begrenzten Abschnittes der Führungsschiene wirkt, wird der Vorschub derjenigen Wandelemente, die nicht mehr vom Endloselement angetrieben werden und sich somit außerhalb des Wirkungsbereiches der Antriebseinrichtung befinden, durch die erfindungsgemäßen Verbindungsmittel sichergestellt. Die Verbindungsmittel sind nämlich zur lösbaren, stirnseitigen Verbindung der sich außerhalb des Wirkungsbereiches der Antriebseinrichtung befindenden Wandelemente miteinander und mit dem oder den vom Endloselement angetriebenen Wandelementen vorgesehen. Durch die Verbindungsmittel werden also die einzelnen Wandelemente miteinander verbunden, wobei die nun verbundenen Wandelemente als Einheit - wie eine Schiebewand - dadurch bewegt werden können, daß jeweils mindestens eines der Wandelemente vom Endloselement direkt angetrieben wird.

Während des Aufbaus der Raumtrennwand werden die einzelnen Wandelemente nacheinander verbunden und bewegt, indem das jeweils letzte Wandelement vom Endloselement auf das vorangegangene und vom Endloselement nicht mehr angetriebene Wandelement bewegt wird, auf dieses stößt und dort mit Hilfe der Verbindungsmittel angekoppelt wird, so daß nach und nach eine wie eine Schiebewand bewegte Einheit aus verbundenen Wandelementen entsteht, die die Raumtrennwand bildet. Dabei schiebt das jeweils hinterste Wandelement, welches vom Endloselement direkt angetrieben wird, die mit diesem verbundenen übrigen Wandelemente während deren Bewegung entlang der Führungsschiene.

Beim Abbau der Raumtrennwand werden dagegen die miteinander verbundenen Wandelemente von dem in Bewegungsrichtung betrachtet vordersten Wandelement gezogen, da dieses als erstes wieder in den Wirkungsbereich des Endloselementes gelangt und von dieser angetrieben wird.

Zweckmäßigerweise lösen dann die Verbindungsmittel die Verbindung mit dem nächstfolgenden Wandelement, wenn dieses ebenfalls bereits wieder vom Endloselement angetrieben wird, so daß das vorangegangene und nun gelöste Wandelement beispielsweise in einem Magazin gestapelt werden kann.

Bei einer Ausführung mit einem Magazin zum Parken der Wandelemente, wobei die Führungsschiene am Magazin vorbeigeführt ist, ist vorzugsweise das Endloselement im Bereich des Magazins angeordnet und derart ausgebildet, daß es stets mindestens das gerade aus dem Magazin ausgefahrene oder in dieses einzufahrende Wandelement antreibt.

Ist ein Magazin zum Parken der Wandelemente vorgesehen, so erstreckt sich bevorzugt das Endloselement zumindest teilweise über den der Zuführungsschiene zugewandten Bereich des Magazins.

Gewöhnlich sind die Wandelemente jeweils an mindestens zwei in der Führungsschiene verschiebbaren und um Tragbolzen drehbaren Tragorganen aufgehängt. Das Magazin kann mindestens zwei parallel zueinander verlaufende Schienen aufweisen, die sich winklig oder quer an die Führungsschiene anschließen und deren Abstand voneinander derart bemessen ist, daß jeweils nur ein Tragorgan eines im Magazin befindlichen Wandelementes in einer Schiene geführt ist. Dadurch erfolgt die Bewegung der Wandelemente innerhalb des Magazins winklig oder quer zur Bewegung der Wandelemente entlang der Führungsschiene; die Wandelemente werden also seitlich von der Führungsschiene in das Magazin eingefahren oder aus diesem ausgefahren. Zweckmäßigerweise erstreckt sich das Endloselement beidseitig des Abzweigpunktes einer Schiene des Magazins von der Führungsschiene.

Die Verbindungsmittel können hierzu derart ausgebildet sein, daß die Wandelemente beim Ausfahren aus dem Magazin nacheinander miteinander verbunden und beim Einfahren in das Magazin nacheinander wieder voneinander gelöst werden.

Bevorzugt weisen die Verbindungsmittel Stifte und Augen auf, von denen jeweils ein Stift am einen Wandelement zu einem Auge am benachbarten Element ausgerichtet und in das Auge steckbar ist. Sofern im Magazin die Wandelemente winklig oder quer zur Führungsschiene bewegbar sind, sollten sich zweckmäßigerweise die Stifte im wesentlichen in Richtung der Bewegung der Wandelemente im Magazin erstrecken. Dies hat den Vorteil, daß beim Ausfahren der Wandelemente aus dem Magazin automatisch eine Verbindung zwischen den Wandelementen hergestellt wird, indem nämlich ein Stift des einen Wandelementes in Eingriff gelangt mit einem Auge eines benachbarten Wandelementes. In gleicher, jedoch umgekehrter Weise lassen sich beim Einfahren in das Magazin die Wandelemente wieder trennen, indem nämlich die Stifte aus den Augen herausgezogen werden.

Alternativ können die Verbindungsmittel auch Haken aufweisen.

Da die Wandelemente mit ihren Stirnseiten in Anlage aneinander bringbar sind, sollten zweckmäßigerweise die Verbindungsmittel auch an den Stirnseiten der Wandelemente angebracht sein.

Die Führungsschiene kann nicht nur gerade, sondern auch zumindest leicht gekrümmt verlaufen.

Nachfolgend werden bevorzugte Ausführungsbeispiele der Erfindung anhand der beiliegenden Zeichnungen näher erläutert. Es zeigen:
- Figur 1: eine Seitenansicht auf miteinander verbundene Wandelemente einer Raumtrennwand;
- Figur 2: eine schematische Draufsicht auf die Anordnung von Figur 1;
- Figur 3: in Draufsicht auf eine vergrößerte Einzelansicht des Verbindungsbereiches zwischen Magazin und Führungsschiene;
- Figur 4: eine Seitenansicht auf obere Abschnitte zweier verbundener Wandelemente;
- Figur 5: eine schematische Ansicht von unten auf ein Schienensystem im Bereich eines Magazins;
- Figur 6: eine vergrößerte Einzeldarstellung einer Abzweigung eines Schienenabschnittes des Magazins von einer Führungsschiene aus Figur 1;
- Figur 7: einen Querschnitt durch einen Schienenabschnitt des Magazins entlang der Linie VII-VII von Figur 5; und
- Figur 8: einen Querschnitt durch die Führungsschiene entlang der Linie VIII-VIII von Figur 5.

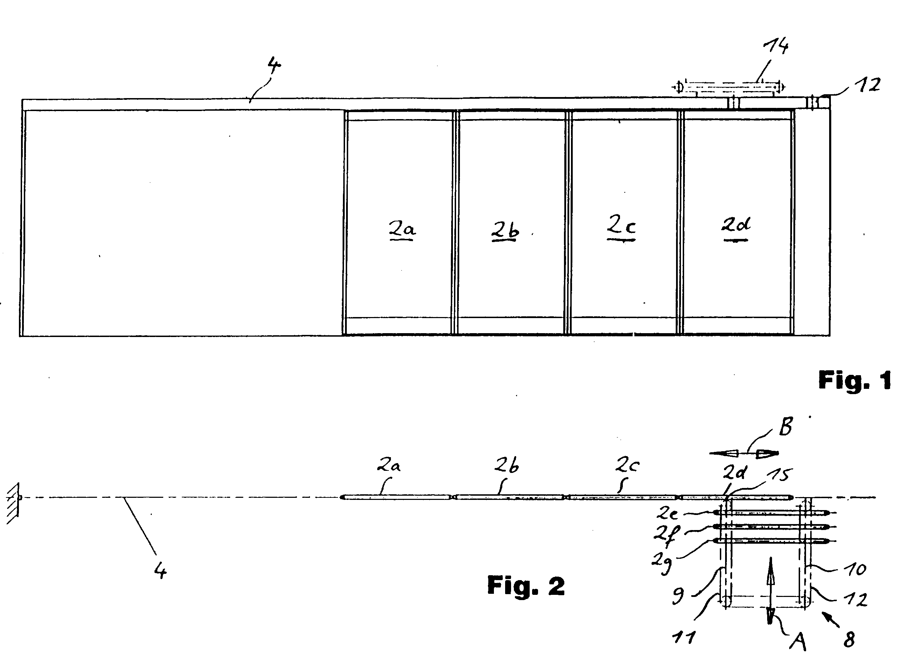

Wie die Figuren 1 und 2 zeigen, besteht die dort dargestellte Raumtrennwand aus mehreren verfahrbaren Wandelementen 2a bis g. Die Wandelemente bestehen gewöhnlicherweise aus einem Metallrahmen und zwei beidseitig an diesem befestigten Deckplatten, wobei der Rahmen einen oberen Querholm, einen unteren Querholm sowie zwei diese verbindende Stirnprofilleisten aufweist. Der Rahmen, die Deckplatten, die Querholme und die Stirnprofilleisten sind in den Figuren im einzelnen nicht näher bezeichnet und dargestellt.

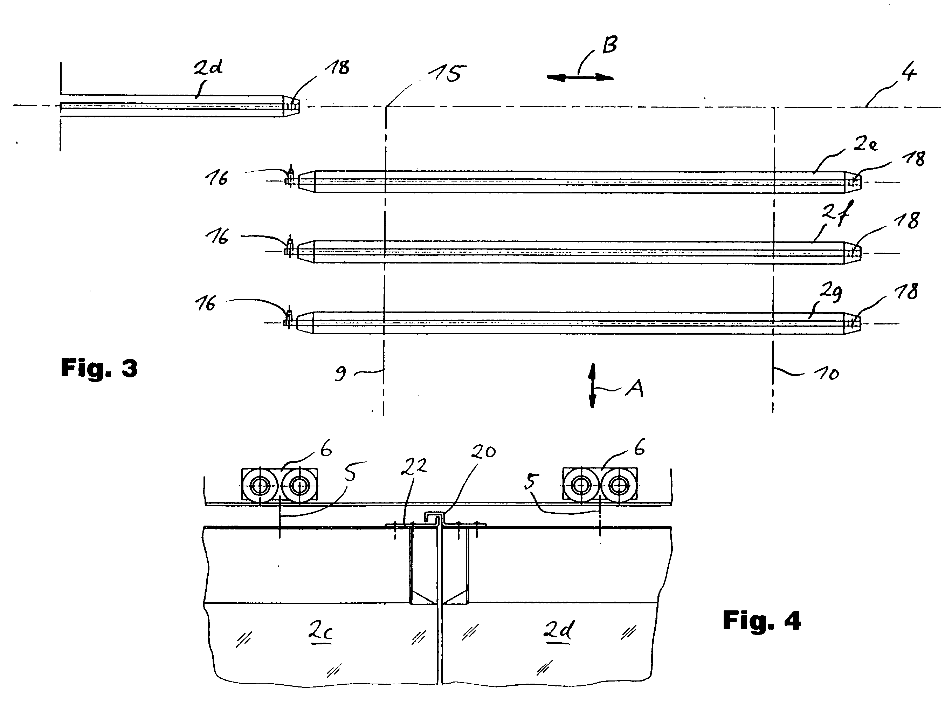

Die Wandelemente sind entlang einer Führungsschiene 4 bewegbar, die beispielsweise an einer Decke des Raumes befestigt ist. Wie Figur 4 erkennen läßt, sind am oberen Querholm der Wandelemente Tragbolzen 5 befestigt, an deren oberen Enden Tragorgane 6, im vorliegenden Fall als Rollenwagen ausgebildet, drehbar gelagert sind. Jedes Tragorgan 6 ist in bekannter Weise mit Rollen ausgerüstet, welche auf oder in der Führungsschiene 4 laufen. Demnach hängen die Wandelemente in der dargestellten Ausführung an den in der Führungsschiene laufenden Tragorganen 6. Gewöhnlich hängt jedes der Wandelemente 2a bis g an zwei Tragorganen 6.

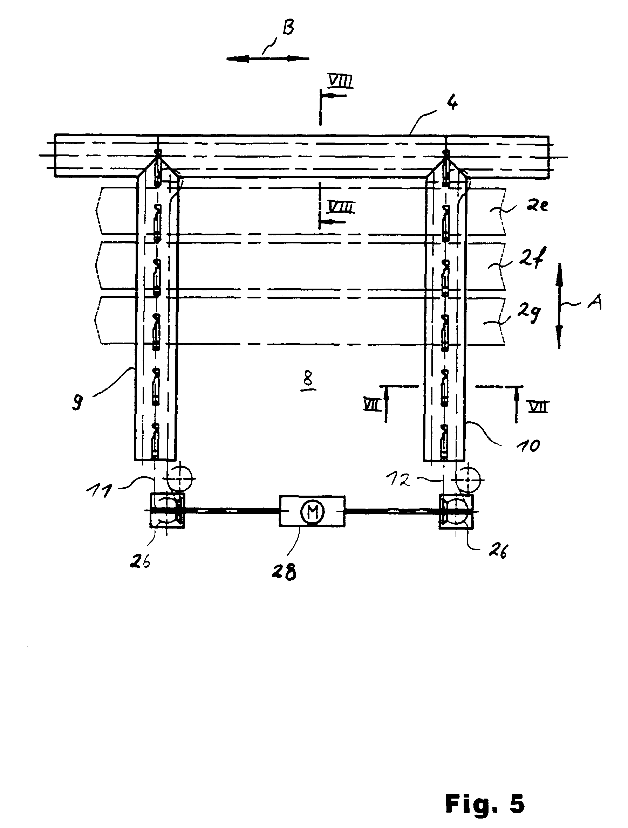

Wie insbesondere Figur 2 entnehmbar ist, ist am Anfang der Führungsschiene 4 ein Magazin 8 zum "Paketieren" der Wandelemente vorgesehen, das zwei parallele Schienenabschnitte 9, 10 enthält, die senkrecht von der Führungsschiene 4 abzweigen und voneinander einen Abstand aufweisen, welcher dem Abstand von zwei an einem Wandelemente vorgesehenen Tragorganen 6 entspricht. In Figur 2 sind der Einfachheit halber die Führungsschiene 4 und die Schienenabschnitte 9, 10 des Magazins 8 lediglich durch Strich-Punkt-Linien angedeutet. An beiden Schienenabschnitten 9, 10 des Magazins 8 ist jeweils ein Endloselement 11, 12 angeordnet, das über Umlenkrollen 26 umläuft und von einem Motor 28 angetrieben wird (vgl. Figur 5). Die im Magazin befindlichen Wandelemente, also gemäß Figur 2 die Wandelemente 2e, f und g, hängen mit ihren Rollenwagen an den Schienenabschnitten 9 und 10 und befinden sich über nicht näher dargestellte Mitnehmer in Eingriff mit den Endloselementen 11 und 12, so daß sie innerhalb des Magazins 8 quer zu ihrer Längserstreckung in Richtung des Pfeils A bei Antrieb der Endloselemente 11, 12 bewegt werden.

Dagegen werden entlang der Führungsschiene 4 die Wandelemente in Richtung ihrer Längserstreckung bewegt, wie dies in Figur 2 durch den Pfeil B angedeutet ist. Hierzu ist ein von einem nicht dargestellten Motor angetriebenes und über nicht näher bezeichnete Rollen umlaufendes Endloselement 14 vorgesehen, welches in oder gemäß Figur 1 benachbart zu der Führungsschiene 4 angeordnet ist. Damit die Wandelemente vom Endloselement 14 bewegt werden können, gelangen die Wandelemente über nicht dargestellte Mitnehmer in Eingriff mit dem Endloselement 14.

Die effektive Länge des Endloselementes 14, also diejenige Länge, die vom Abstand der beiden Rollen definiert wird und somit der Länge eines Trums entspricht, beträgt nur einen Bruchteil der Gesamtlänge der Führungsschiene 4, wie Figur 1 erkennen läßt. In der dargestellten Ausführung entspricht die effektive Länge des Endloselementes 11 etwa der Länge eines Wandelementes.

Das Endloselement 14 ist außerdem so angeordnet, daß es sich teilweise über den der Führungsschiene 4 zugewandten Bereich des Magazins 8, und zwar beidseitig des Abzweigpunktes 15 der Schiene 9 von der Führungsschiene 4, erstreckt. Dadurch ist ein reibungsloser Übergang bei der Bewegung eines Wandelementes zwischen der Führungsschiene 4 und dem Magazin 8 möglich.

An den Stirnseiten sind die Wandelemente mit Verbindungsmitteln versehen, die eine stirnseitige Kopplung der Wandelemente aneinander ermöglichen.

Bei der in Figur 3 dargestellten Ausführung bestehen die Verbindungsmittel aus Zapfen 16 und Augen 18. Dabei sitzen die Stifte 16 an der einen Stirnseite der Wandelemente und die Augen 18 an der gegenüberliegenden Stirnseite. Außerdem erstrecken sich die Stifte 16 und die Augen 18 in Richtung ↔A der Bewegung der Wandelemente im Magazin 8 und somit rechtwinklig zur Führungsschiene 4 und sind auf gleicher Höhe angeordnet, so daß jeweils ein Stift 16 am einen Wandelement zu einem Auge 18 am benachbarten Wandelement ausgerichtet ist, wenn sich die beiden Wandelemente in einer Stellung wie z.B. die in Figur 3 dargestellten Wandelemente 2d und 2e befinden. Gemäß Figur 3 hängt das Wandelement 2d bereits an der Führungsschiene 4 und ist so weit aus dem Bereich des Magazins 8 herausgefahren, daß dessen Auge 18 in Ausrichtung zum Stift 16 des nächsten, sich noch im Magazin befindlichen Wandelementes 2e gelangt ist. Bei weiterer Fortbewegung des Wandelementes 2e in Richtung auf die Führungsschiene greift dessen Stift 16 schließlich in das Auge 18 des Wandelementes 2d ein, wenn das Wandelement 2e auf die Führungsschiene 4 verfahren worden ist und nun an dieser hängt. Auf gleiche, jedoch umgekehrte Weise kann das Wandelement 2e vom Wandelement 2d wieder gelöst werden, wenn es in das Magazin 8 eingefahren werden soll.

An dieser Stelle sei noch einmal darauf hingewiesen, daß die Stifte 16 und die Augen 18 in der zuvor beschriebenen Anordnung an jedem der Wandelemente 2a bis g vorgesehen sind und für eine stirnseitige Kopplung der Wandelemente sorgen, wenn diese an der Führungsschiene 4 hängen.

Figur 4 zeigt eine weitere bevorzugte Ausführungsform der Verbindungsmittel. Anstelle von Stift und Auge sind bei dieser Ausführung jeweils ein Paar von Haken 20 und 22 vorgesehen, die am oberen Querholm der Wandelemente befestigt sind. Dabei ist der eine Haken 20 benachbart zu der einen Stirnseite und der andere Haken 22 benachbart zu der anderen Stirnseite des betreffenen Wandelementes angebracht, so daß bei Verbindung der Wandelemente sich die beiden Haken 20 und 22 jedes Paares stets gegenüber liegen. Die Haken 20 und 22 sind so ausgebildet, daß sie miteinander in Eingriff gelangen, wenn die betreffenen Wandelemente quer zu ihrer Längserstreckung bewegt werden, d.h. wenn das eine Wandelement bereits an der Führungsschiene 4 hängt und sich wie das in Figur 3 gezeigte Wandelement 2d gerade außerhalb des Bereiches des Magazins 8 befindet und das andere Wandelement als nächstes Wandelement (wie das Wandelement 2e gemäß Figur 3) aus dem Magazin 8 heraus in Richtung auf die Führungsschiene 4 bewegt wird. In gleicher, jedoch umgekehrter Weise läßt sich der Eingriff zwischen den Haken 20 und 22 wieder lösen.

Zum Aufbau der Raumtrennwand werden nun nacheinander die Wandelemente aus dem Magazin 8 ausgefahren. Beim Übergang von den Schienenabschnitten 9, 10 des Magazins 8 auf die Führungsschiene 4 wird das Wandelement mit dem vorangegangenen und bereits aus dem Bereich des Magazins 8 herausgefahrenen Wandelement in der zuvor beschriebenen Weise gekoppelt und gelangt gleichzeitig in Eingriff mit dem Endloselement 14, welches dieses Wandelement nun antreibt und aus dem Bereich des Magazins 8 heraustransportiert und dann jedoch stoppt, so daß das Wandelement in der Stellung des in Figur 3 gezeigten Wandelementes 2d verbleibt, um für die Ankopplung des aus dem Magazin 8 herausfahrenden nächsten Wandelementes bereit zu sein. Auf diese Weise werden die Wandelemente nach und nach miteinander verbunden, wobei die bereits miteinander verbundenen Wandelemente (2a bis d gemäß Figur 1) als Einheit wie eine Schiebewand stets vom jeweils letzten Wandelement, welches gerade als letztes dem Magazin 8 entnommen wurde, also gemäß Figur 1 das Wandelement 2d, mit Hilfe des Endloselementes 14 vorgeschoben werden.

Zum Abbau der Raumtrennwand werden die nun verbundenen Wandelemente von demjenigen Wandelement in den Bereich des Magazins 8 gezogen, welches sich bereits in Eingriff mit dem Endloselement 14 befindet und als nächstes Wandelement in das Magazin 8 eingefahren wird. Beim Einfahren in das Magazin 8 löst sich das Wandelement jeweils von dem nachfolgenden Wandelement, welches noch an der Schiene 4 hängt und sich bereits ebenfalls in Eingriff mit dem Endloselement 14 befindet. Auf diese Weise werden die Wandelement vom Endloselement 14 nacheinander in den Bereich des Magazins 8 gezogen, wo sie dann beim Übergang von der Führungsschiene 4 auf die Schienenabschnitte 9, 10 des Magazins 8 unter Änderung ihrer Bewegungsrichtung um 90° voneinander getrennt werden.

An dieser Stelle sei angemerkt, daß die Wandelemente im Magazin 8 auch von Hand anstelle durch die Endloselemente 11, 12 in Richtung des Doppelpfeils A bewegt werden können. Auch sind andere Ausführungen von Verbindungsmitteln denkbar, welche beispielsweise nicht durch Querbewegung der Wandelemente, sondern durch Aufeinanderstoßen der Stirnseiten in Eingriff miteinander gelangen können.

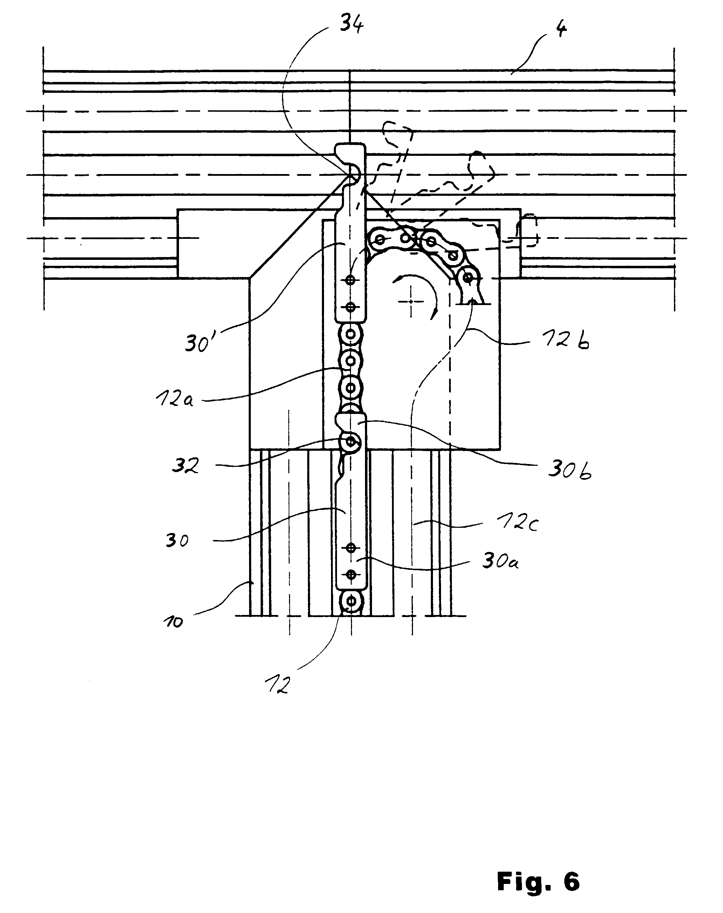

Wie Figur 5 deutlich erkennen läßt, sind in den beiden Schienenabschnitten 9 und 10 des Magazins 8 die Endloselemente 11 und 12 angeordnet, die über Umlenkrollen 26 umlaufen. Die Umlenkrollen 26 werden synchron vom Motor 28 angetrieben, wodurch beide Endloselemente 11 und 12 synchron, also in gleicher Richtung und mit gleicher Geschwindigkeit, bewegt werden. Bei dem vorliegend beschriebenen Ausführungsbeispiel bestehen die Endloselemente 11 und 12 jeweils aus einer Endloskette mit einzelnen Kettengliedern, wie insbesondere Figur 6 zeigt. Alternativ kann aber auch ein Endlosseil oder -band vorgesehen sein.

An jedem Endloselement 11 und 12 sind mehrere Mitnehmer 30 befestigt. Wie nachfolgend noch näher beschrieben wird, sind die Mitnehmer 30 für den lösbaren Eingriff mit an den Tragorganen der Wandelemente vorgesehenen Mitnehmerstiften ausgebildet. Dadurch sind sie in der Lage, die in Figur 5 gestrichelt angedeuteten Wandelemente 2e - g innerhalb des Magazins 8 entlang der Schienenabschnitte 9, 10 in Richtung des Doppelpfeils A zu fördern, wenn die Endloselemente 11, 12 vom Motor 28 angetrieben werden.

Die Endloselemente 11, 12 besitzen jeweils die gleiche Anzahl von Mitnehmern 30, wobei jeweils ein Mitnehmer des ersten Endloselementes 11 und ein Mitnehmer des zweiten Endloselementes 12 ein Paar bilden und in jeder Stellung während der Bewegung der Endloselemente 11, 12 im wesentlichen den gleichen Abstand zur Führungsschiene 4 aufweisen.

Wie insbesondere Figur 6 deutlich erkennen läßt, sind die Mitnehmer 30 als im wesentlichen rechteckförmige, längliche Flachelemente ausgebildet, die mit ihrem einen Ende 30a jeweils an einem Kettenglied des Endloselementes befestigt sind und an ihrem anderen freien Ende 30b mit einer im wesentlichen halbkreisförmigen Aussparungen 32 versehen sind. Mit Hilfe der halbkreisförmigen Aussparungen 32 können die Mitnehmer 30 in die an den Tragorganen der Wandelemente vorgesehenen Mitnehmerstifte lösbar eingehakt werden. Die Mitnehmerstifte sind zylindrisch geformt und haben einen solchen Durchmesser, daß sie von den halbkreisförmigen Aussparungen 32 der Mitnehmer 30 im wesentlichen zur Hälfte umfaßt werden können. Wie insbesondere in Figur 6 gezeigt ist, läuft das Endloselement 12 mit seinem einen Trum in der dargestellten Ausführung etwa mittig im Schienenabschnitt 10 und dabei entlang eines parallel zu diesem verlaufenden, geradlinigen Bewegungswegabschnitt 12a. An diesen Bewegungswegabschnitt 12a schließt sich ein Kurvenabschnitt 12b an, entlang dessen das Endloselement 12 mit Hilfe einer nicht dargestellten Umlenkrolle um etwa 225° umgelenkt und dann wieder um etwa 45° in die entgegengesetzte Richtung zurückgelenkt wird, so daß das andere Trum des Endloselementes 12 entlang eines sich an den Kurvenabschnitt 12b anschließenden und parallel zum Bewegungswegabschnitt 12a verlaufenden Bewegungswegabschnitt 12c läuft.

Der Kurvenabschnitt 12b des Bewegungsweges des Endloselementes 12 ist vor einem Abzweigpunkt 34 angeordnet, welcher den Schnittpunkt der Mittelachsen der Führungsschiene 4 und des Schienenabschnittes 10 definiert. Da der Bewegungswegabschnitt 12a des Endloselementes 12 entlang der Mittelachse des Schienenabschnittes 10 verläuft, ist der Bewegungswegabschnitt 12a genau auf den Abzweigpunkt 34 ausgerichtet.

Die Mitnehmer 30 sind an den Kettengliedern in Längsrichtung derart angeordnet, daß sie mit ihren freien Enden 30b in Richtung der Bewegung des entlang des Bewegungswegabschnittes 12a laufenden Trums des Endloselementes 12 auf die Führungsschiene 4 und dabei direkt auf den Abzweigpunkt 34 gerichtet sind. Wie Figur 6 außerdem erkennen läßt, besitzen die Mitnehmer 30 eine größere Länge als die Kettenglieder und ragen somit über diese hinaus, wobei in der dargestellten Ausführung die Mitnehmer 30 etwa dreimal so lang sind wie die einzelnen Kettenglieder des Endloselementes 12. Die Länge der Mitnehmer 30 und die Lage der Aussparung 32 an deren freiem Ende 30b sind so gewählt, daß der gedachte Mittelpunkt der halbkreisförmigen Aussparung 32 auf einer senkrecht zur Führungsschiene 4 verlaufenden und den Abzweigpunkt 34 durchsetzenden Achse und somit in Dekkung zum Abzweigpunkt 34 liegt, wenn das den zugehörigen Mitnehmer tragende Kettenglied sich genau an dem der Führungsschiene 4 benachbarten Ende des mittig im Schienenabschnitt 10 verlaufenden Bewegungswegabschnittes 12a befindet, d.h. unmittelbar bevor es in den Kurvenabschnitt 12b des Bewegungsweges des Endloselementes 12 eintritt. Diese Position nimmt der in Figur 2 dargestellte und mit dem Bezugszeichen 30' bezeichnete Mitnehmer ein. Wie Figur 6 erkennen läßt, öffnet sich dann die halbkreisförmige Aussparung 32 quer zur Längserstreckung des Mitnehmers 30 zu der dem Kurvenabschnitt 12b und dem außermittig im Schienenabschnitt 10 verlaufenden Bewegungswegabschnitt 12c entgegengesetzten Seite des Mitnehmers 30 und somit in Richtung der Führungsschiene 4 und somit in Richtung des in Figur 5 abgebildeten Doppelpfeils B. Außerdem liegt die halbkreisförmige Aussparung 32 mit ihrem gedachten Mittelpunkt auf der Längsachse der Mitnehmer 30 und öffnet sich mit zunehmender Breite zur Seite der Mitnehmer 30.

Wenn sich ein Mitnehmer in der Stellung des in Figur 6 dargestellten Mitnehmers 30' befindet, kann ein Tragorgan eines Wandelementes mit seinem Mitnehmerstift in die oder aus der Aussparung 32 durch Verfahren entlang der Führungsschiene 4 geschoben werden.

Ein in der Stellung des in Figur 6 gezeigten Mitnehmers 30' befindlicher Mitnehmer wird aber auch durch Verschwenken von einem im Abzweigpunkt 34 in der Führungsschiene 4 befindlichen Tragorgan eines Wandelementes gelöst, wie dies in Figur 6 gestrichelt dargestellt ist. Dabei wird der Mitnehmer nach Eintritt des diesen tragenden Kettengliedes in den Kurvenabschnitt 12b des Bewegungsweges des Endloselementes 12 bei dessen fortgesetzter Bewegung und während des Durchfahrens des Kurvenabschnittes 12b aus dem Bereich der Führungsschiene 4 heraus verschwenkt. Da die Mitnehmer 30 an den Kettengliedern des Endloselementes 12 befestigt sind, machen diese also die Kurvenbewegung mit, wenn die zugehörigen Kettenglieder den Kurvenabschnitt 12b durchfahren.

Da die für den Eingriff mit dem Mitnehmerstift eines Tragorgans eines Wandelementes vorgesehene Aussparung 32 sich zu der dem Kurvenabschnitt 12b entgegengesetzten Seite öffnet, bewirkt ein Verschwenken in Richtung auf den Kurvenabschnitt 12b, also gemäß Figur 6 nach rechts, daß der Mitnehmer von einem im Abzweigpunkt 34 befindlichen Tragorgan eines Wandelementes gelöst wird. Bei umgekehrter Schwenkbewegung, also bei einer Schwenkbewegung des Mitnehmers auf den Abzweigpunkt 34 zu (gemäß Figur 6 nach links), indem sich das zugehörige Kettenglied des Endloselementes 12 durch den Kurvenabschnitt 12b des Bewegungsweges des Endloselementes 12 und dann entlang des mittig im Schienenabschnitt 4 vorgesehenen Bewegungswegabschnittes 12a bewegt, wird der Mitnehmer in der Stellung des in Figur 6 gezeigten Mitnehmers 30' in den Mitnehmerstift eines im Abzweigpunkt 34 befindlichen Tragorgans eines Wandelementes eingehakt und zieht nun während seiner fortgesetzten Bewegung entlang des Bewegungswegabschnittes 12a das Tragelement von der Führungsschiene 4 auf den Schienenabschnitt 10 und somit das zugehörige Wandelement in das Magazin 8 (vgl. Figur 5).

An dieser Stelle sei darauf hingewiesen, daß der Schienenabschnitt 9, das zugehörige Endloselement 11 und die daran befestigten Mitnehmer (vgl. Figur 5) in gleicher Weise angeordnet und ausgebildet sind wie der Schienenabschnitt 10, das Endloselement 12 und die daran befestigten Mitnehmer 30 gemäß der zuvor erfolgten Beschreibung anhand von Figur 6.

Die an den Endloselementen 11 und 12 befestigten Mitnehmer 30 können im Bereich der Abzweigung der Schienenabschnitte 9 und 10 von der Führungsschiene 4 in gleicher Richtung wirken und verschwenkt werden. Diese in Figur 5 gezeigte Anordnung hat den Vorteil, daß die im Abzweigpunkt 34 befindlichen Tragorgane aus den Aussparungen 32 der Mitnehmer 30 heraus- oder hineingeschoben werden können, wenn sich die Mitnehmer in der Stellung des in Figur 6 gezeigten Mitnehmers 30' befinden.

Die beiden Endloselemente 11 und 12 können jedoch auch so angeordnet und die Mitnehmer 30 daran befestigt sein, daß die Mitnehmer 30 gegeneinander wirken und gegenläufig zueinander verschwenkt werden. Bei dieser Ausführung ist die in Figur 6 dargestellte Anordnung spiegelbildlich am Schienenabschnitt 9 vorgesehen. Eine solche Anordnung hat den Vorteil, daß die Mitnehmer 30 eine zentrierende Kraft auf die in der Führungsschiene 4 befindlichen Mitnehmer 30 ausüben.

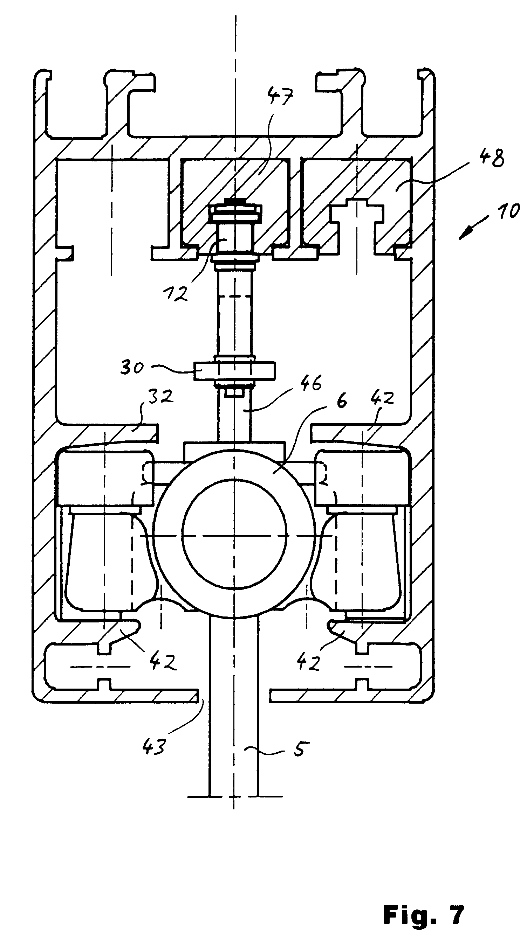

Figur 7 zeigt einen Querschnitt durch den Schienenabschnitt 10. In dieser Figur ist das Tragorgan 6 gezeigt, das entlang eines im Schienenabschnitt 10 ausgebildeten Profils 42 verfahrbar ist. An der Unterseite des Schienenabschnittes 10 ist ein mittig in Längsrichtung verlaufender Mittelschlitz 43 vorgesehen, durch das sich der Tragbolzen 5 erstreckt, durch den das zugehörige Wandelement am Tragorgan 6 aufgehängt ist.

Das Tragorgan 6 ist an seiner Oberseite mit einem aufrechtstehenden, zylindrischen Mitnehmerstift 46 versehen, in den ein Mitnehmer 30 in der zuvor beschriebenen Weise ein- und aushakbar ist.

An der Oberseite des Schienenabschnittes 10 ist mittig ein erstes Gleitprofil 47 angeordnet, in dem das eine Trum des Endloselementes 12 gleitend geführt ist und für diesen den mittigen Bewegungswegabschnitt 12a (vgl. Figur 6) bildet. Neben dem ersten Gleitprofil 47 ist außermittig an der Oberseite des Schienenabschnittes 10 ein zweites Gleitprofil 48 angeordnet, in dem das andere Trum des Endloselementes 12, das in Figur 7 aus Gründen der Übersichtlichkeit nicht dargestellt ist, gleitend geführt ist und für diesen den Bewegungswegabschnitt 12c (vgl. Figur 6) bildet. Die Gleitprofile 47, 48 weisen einen nach unten offenen Schlitz auf, aus dem das Endloselement 12 mit einem Teil herausragt, an dem unterhalb des Endloselementes 12 und in einem Abstand zu diesem über Abstandshülsen die Mitnehmer 30 befestigt sind, wie Figur 7 erkennen läßt.

Der Schienenabschnitt 9 des Magazins 8 ist in der gleichen Weise wie der Schienenabschnitt 10 aufgebaut.

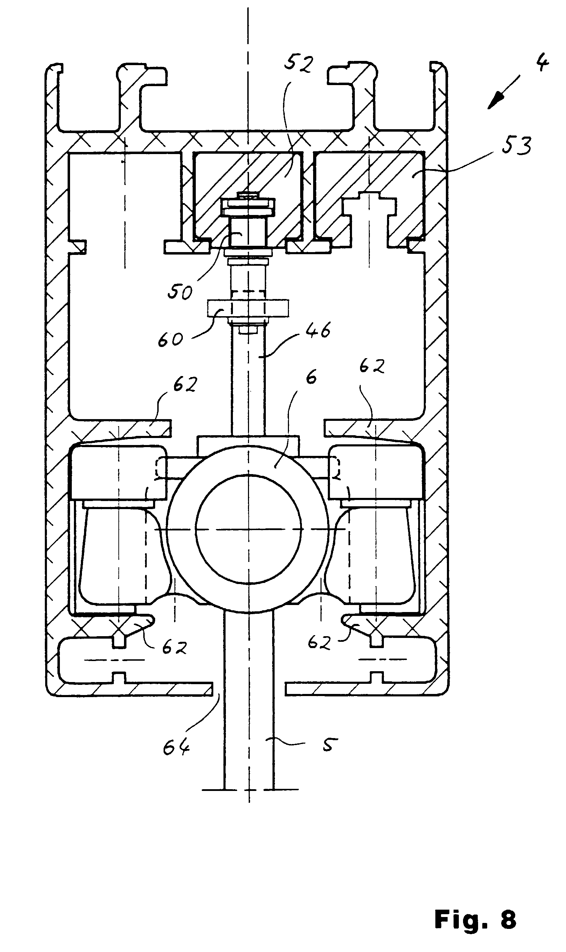

Figur 8 zeigt einen Querschnitt durch die Führungsschiene 4. Bei der dargestellten Ausführung ist in der Führungsschiene 4 ebenfalls ein antreibbares Endloselement 50 vorgesehen, das in der einen oder anderen Richtung umläuft, wobei ein nicht dargestellter Antriebsmotor dieses Endloselement 50 antreibt. Ein Trum des Endloselementes 50 läuft in der dargestellten Ausführungsform in einem mittig an der Oberseite der Führungsschiene 4 angebrachten Gleitprofil 52. Das andere Trum des Endloselementes 50, das aus Gründen der Übersichtlichkeit in Figur 8 nicht dargestellt ist, läuft außerhalb der Mittelachse der Führungsschiene 4 in einem neben dem Gleitprofil 52 an der Oberseite angebrachten Gleitprofil 53 zurück. Das Endloselement 50 ist in gleicher Weise aufgebaut wie die Endloselemente 11 und 12; das gleiche gilt auch für die Gleitprofile 52 und 53. Ebenfalls sind an der Unterseite des Endloselementes 50 in Abständen an diesem Mitnehmer 60 befestigt, die den Mitnehmerstift 46 eines im Abzweigpunkt 34 befindlichen Tragorgans 6 hintergreifen und zum Transport des zugehörigen Wandelementes dieses bei fortgesetzter Bewegung des Endloselementes 50 mitnehmen.

Die Führungsschiene 4 weist im wesentlichen die gleichen Querschnittsabmessungen wie die Schienenabschnitte 9 und 10 des Magazins 8 auf. Insbesondere sind die Tragorgane 6 in einem Gleitprofil 62 geführt, das auf gleicher Höhe wie das Gleitprofil 42 des Schienenabschnittes 10 und das entsprechende Gleitprofil des Schienenabschnittes 9 angeordnet ist. Die Tragbolzen 5 erstrecken sich durch einen mittig in Längsrichtung verlaufenden Mittelschlitz 64. Wie ein Vergleich der Figuren 7 und 8 erkennen läßt, sind dagegen die an den Endloselementen 11 und 12 befestigten Mitnehmer 30 in geringerer Höhe als die am Endloselement 50 befestigten Mitnehmer 60 angebracht. Diese Anordnung hat den Vorteil, daß sich die Mitnehmer 30 und die Mitnehmer 60 nicht gegenseitig behindern können, wenn sich während des Übergangs eines Wandelementes zwischen der Führungsschiene 4 und dem Magazin 8 ein Mitnehmer 30 und ein Mitnehmer 60 jeweils kurzzeitig gleichzeitig in Eingriff mit dem Mitnehmerstift 46 eines Tragorgans 6 dieses Wandelementes befinden. Im übrigen können die Mitnehmer 60 in gleicher oder ähnlicher Weise ausgebildet und angeordnet sein wie die Mitnehmer 30.

## Patentansprüche

1. Raumtrennwand aus verfahrbaren und mit ihren senkrechten Stirnseiten in dichtende Anlage aneinander bzw. an Abschlußelemente bringbaren Wandelementen (2a - g), die mit Hilfe von Tragorganen (6) entlang einer ersten Schiene (10) und mindestens entlang einer zweiten Schiene (4) bewegbar sind, wobei die erste Schiene (10) von der zweiten Schiene (4) abzweigt und der ersten Schiene (10) ein entlang dieser bewegbares und antreibbares Förderelement (12) zugeordnet ist, an dem Mitnehmer (30) befestigt sind, die zum Transport eines Wandelementes entlang der ersten Schiene (10) in lösbaren Eingriff mit dessen Tragorganen (6) bringbar sind, und wobei für den Übergang eines Wandelementes zwischen der ersten und der zweiten Schiene (10, 4) jeder Mitnehmer (30) zu einem im Abzweigpunkt (34) befindlichen Tragorgan (6) des Wandelementes hin bzw. von diesem weg verschwenkbar ist, um in Eingriff mit diesem Tragorgan (6) zu gelangen bzw. sich von diesem zu lösen, wozu die Mitnehmer (30) jeweils einen Eingriffsabschnitt (32) aufweisen,
dadurch gekennzeichnet, daß die Mitnehmer (30) am Förderelement (12) derart angeordnet sind, daß stets der Eingriffsabschnitt (32) desjenigen Mitnehmers (30'), der sich in der Stellung für den Eingriff mit einem Tragorgan (6) eines Wandelementes im Abzweigpunkt (34) befindet, in Richtung der zweiten Schiene (4) weist und bei Antrieb des Förderelementes (12) für den Übergang eines Wandelementes von der ersten auf die zweite Schiene (10, 4) jeder Mitnehmer (30) mit seinem Eingriffsabschnitt (32) von einem im Abzweigpunkt (34) befindlichen Tragorgan (6) eines Wandelementes weg und dabei aus der Bewegungsbahn dieses Wandelementes entlang der zweiten Schiene (4) heraus verschwenkbar ist, um sich von diesem zu lösen und die nach dem Übergang von der ersten auf die zweite Schiene (10, 4) anschließende Bewegung des Wandelementes entlang der zweiten Schiene (4) nicht zu behindern.

2. Raumtrennwand nach Anspruch 1,
dadurch gekennzeichnet, daß der Bewegungsweg des Förderelementes (12) vor dem Abzweigpunkt (34) einen von diesem wegführenden Kurvenabschnitt (12b) aufweist und daß die Mitnehmer (30) in einer bestimmten Stellung gegenüber dem Förderelement (12) an diesem fixiert sind.

3. Raumtrennwand nach Anspruch 2,
dadurch gekennzeichnet, daß der Bewegungsweg einen parallel zur ersten Schiene (10) verlaufenden Abschnitt (12a) aufweist, an den sich der Kurvenabschnitt (12b) anschließt.

4. Raumtrennwand nach Anspruch 2 oder 3,
dadurch gekennzeichnet, daß die Mitnehmer (30) jeweils einen Eingriffsabschnitt (32) besitzen, der an der vom Kurvenabschnitt (12b) des Bewegungsweges des Förderelementes (12) weggerichteten Seite der Mitnehmer vorgesehen ist.

5. Raumtrennwand nach mindestens einem der Ansprüche 1 bis 4,
dadurch gekennzeichnet, daß die Mitnehmer (30) als hakenförmige Elemente ausgebildet sind, die einen als konkave Aussparung geformten Eingriffsabschnitt (32) aufweisen, um einen hierfür vorgesehenen Abschnitt (46) der Tragorgane (6) lösbar umgreifen zu können.

6. Raumtrennwand nach mindestens einem der Ansprüche 1 bis 5,
dadurch gekennzeichnet, daß die Mitnehmer (30) mit ihrem einen Ende (30a) am Förderelement (12) befestigt und an ihrem anderen freien Ende (30b) mit dem Eingriffsabschnitt (32) versehen sind.

7. Raumtrennwand nach Anspruch 6,
dadurch gekennzeichnet, daß die Mitnehmer (30) als längliche Flachelemente ausgebildet sind.

8. Raumtrennwand nach Anspruch 6 oder 7,
dadurch gekennzeichnet, daß die Mitnehmer (30) mit ihrem freien Ende (30b) in die Bewegungsrichtung des Förderelementes (12) zum Transport der Wandelemente von der ersten Schiene (10) zur zweiten Schiene (4) weisen.

9. Raumtrennwand nach mindestens einem der Ansprüche 1 bis 8,
dadurch gekennzeichnet, daß das Förderelement (12) ein Endloselement ist.

10. Raumtrennwand nach den Ansprüchen 3 und 9,
dadurch gekennzeichnet, daß vor dem Abzweigpunkt (34) eine Umlenkrolle angeordnet ist, um die das Endloselement (12) umläuft.

11. Raumtrennwand nach mindestens einem der Ansprüche 1 bis 10, bei welcher der zweiten Schiene (4) ein entlang dieser bewegbares und antreibbares zweites Förderelement (50) zugeordnet ist, an dem ebenfalls Mitnehmer (60) befestigt sind, die zum Transport eines Wandelementes entlang der zweiten Schiene (4) in lösbaren Eingriff mit dessen Tragorganen (6) bringbar sind,
dadurch gekennzeichnet, daß die Mitnehmer (30) des ersten Förderelementes (12) und die Mitnehmer (60) des zweiten Förderelementes so angeordnet und ausgebildet sind, daß jeweils ein Mitnehmer (30) des ersten Förderelementes (12) und ein Mitnehmer (60) des zweiten Förderelementes (50) gleichzeitig in Eingriff mit einem im Abzweigpunkt (34) befindlichen Tragorgan (6) eines Wandelementes bringbar sind.

12. Raumtrennwand nach Anspruch 11,
dadurch gekennzeichnet, daß die Mitnehmer (30) des ersten Förderelementes (12) und die Mitnehmer (60) des zweiten Förderelementes (50) in unterschiedlicher Höhe angeordnet sind.

13. Raumtrennwand nach mindestens einem der Ansprüche 1 bis 12,
dadurch gekennzeichnet, daß die Tragorgane (6) der Wandelemente mit Mitnehmerstiften (46) versehen sind, mit denen die Mitnehmer (30, 60) in lösbaren Eingriff bringbar sind.

14. Raumtrennwand nach den Ansprüchen 5 und 13,
dadurch gekennzeichnet, daß die Mitnehmerstifte (46) zylindrisch geformt und die Eingriffsabschnitte (32) als entsprechende etwa halbkreisförmige Aussparungen ausgebildet sind.

15. Raumtrennwand nach mindestens einem der Ansprüche 1 bis 14, mit einem Magazin (8) zum Parken der Wandelemente (2e - g),
dadurch gekennzeichnet, daß das Magazin (8) die erste Schiene (10) enthält.

16. Raumtrennwand nach Anspruch 15, bei welcher das Magazin (8) zusätzlich eine ebenfalls von der zweiten Schiene (4) abzweigende dritte Schiene (9) enthält, die Wandelemente jeweils mit zwei Tragorganen (6) versehen sind, die erste Schiene (10) und die dritte Schiene (9) einen Abstand voneinander aufweisen, der dem Abstand der beiden Tragorgane (6) der Wandelemente entspricht, und der dritten Schiene (9) ein Förderelement (11) mit ebenfalls daran befestigten Mitnehmern zugeordnet ist,
dadurch gekennzeichnet, daß das Förderelement (11) und die Mitnehmer in gleicher Weise wie das der ersten Schiene (10) zugeordnete Förderelement (12) und die daran befestigten Mitnehmer (30) angeordnet und ausgebildet sind.

17. Raumtrennwand nach Anspruch 16,
dadurch gekennzeichnet, daß jeweils ein Mitnehmer (30) des der ersten Schiene (10) zugeordneten Förderelementes (12) und ein Mitnehmer des der zweiten Schiene (9) zugeordneten Förderelementes (11) ein Paar mit im wesentlichen dem gleichen Abstand zur zweiten Schiene (4) bilden.

18. Raumtrennwand nach Anspruch 17,
dadurch gekennzeichnet, daß die Mitnehmer (30) eines Paares in gleiche Richtung verschwenkbar sind.

19. Raumtrennwand nach Anspruch 17,
dadurch gekennzeichnet, daß die Mitnehmer (30) eines Paares in entgegengesetzte Richtung verschwenkbar sind.

20. Raumtrennwand nach einem der vorangegangenen Ansprüche, bei welcher die verfahrbaren Wandelemente (2a - g) mittels einer Antriebseinrichtung entlang einer Führungsschiene (4) mit ihren senkrechten Stirnseiten in Anlage aneinander bewegbar sind, wobei die Antriebseinrichtung ein in oder entlang der Führungsschiene (4) angeordnetes antreibbares Endloselement (14) aufweist, mit dem die Wandelemente (2a bis g) in Eingriff bringbar sind,
dadurch gekennzeichnet, daß sich das Endloselement (14) nur entlang eines begrenzten Abschnittes der Führungsschiene (4) erstreckt und ein Wandelement (z.B. 2d) nur entlang dieses Abschnittes antreibt und daß die Wandelemente (2a bis g) mit Verbindungsmitteln (16, 18; 20, 22) zur lösbaren stirnseitigen Verbindung miteinander versehen sind.

21. Raumtrennwand nach Anspruch 20, mit einem Magazin (8) zum Parken der Wandelemente (2a - g), wobei die Führungsschiene (4) am Magazin (8) vorbeigeführt ist,
dadurch gekennzeichnet, daß das Endloselement (14) im Bereich des Magazins (8) angeordnet und derart ausgebildet ist, daß es stets zumindest das gerade aus dem Magazin (8) ausgefahrene oder in dieses einzufahrende Wandelement (2d) antreibt.

22. Raumtrennwand nach Anspruch 21,
dadurch gekennzeichnet, daß sich das Endloselement (14) zumindest teilweise über den der Führungsschiene (4) zugewandten Bereich des Magazins (8) erstreckt.

23. Raumtrennwand nach mindestens einem der Ansprüche 1 bis 22,
dadurch gekennzeichnet, daß die Wandelemente (2a - g) jeweils an mindestens zwei in der Führungsschiene (4) verschiebbaren und um Tragbolzen (5) drehbaren Tragorganen (6) hängen.

24. Raumtrennwand nach den Ansprüchen 21 und 23,
dadurch gekennzeichnet, daß das Magazin (8) mindestens zwei parallel zueinander verlaufende Schienen (9, 10) aufweist, die sich winklig oder quer an die Führungsschiene (4) anschließen und deren Abstand voneinander derart bemessen ist, daß jeweils nur ein Tragorgan (6) eines im Magazin (8) befindlichen Wandelementes (2e bis g) in einer der Schienen (9, 10) geführt ist.

25. Raumtrennwand nach den Ansprüchen 22 und 24,
dadurch gekennzeichnet, daß sich das Endloselement (14) beidseitig des Abzweigpunktes (15) einer Schiene (9) von der Führungsschiene (4) erstreckt.

26. Raumtrennwand nach mindestens einem der Ansprüche 1 bis 25,
dadurch gekennzeichnet, daß die Verbindungsmittel (16, 18) derart ausgebildet sind, daß die Wandelemente (2a bis g) nacheinander beim Ausfahren aus dem Magazin (8) miteinander verbunden und beim Einfahren in das Magazin (8) wieder voneinander gelöst werden.

27. Raumtrennwand nach mindestens einem der Ansprüche 1 bis 26,
dadurch gekennzeichnet, daß als Verbindungsmittel zur lösbaren stirnseitigen Verbindung der Wandelemente miteinander Stifte (16) und Augen (18) vorgesehen sind, von denen jeweils ein Stift (16) am einen Wandelement (z.B. 2e) zu einem Auge (18) am benachbarten Wandelement (2d) ausgerichtet und in das Auge (18) steckbar ist.

28. Raumtrennwand nach den Ansprüchen 26 und 27, bei welcher im Magazin (8) die Wandelemente (2e - g) winklig oder quer zur Führungsschiene (4) bewegbar sind,
dadurch gekennzeichnet, daß die Stifte (16) sich im wesentlichen in Richtung (A) der Bewegung der Wandelemente (2e bis g) im Magazin (8) erstrecken.

29. Raumtrennwand nach mindestens einem der Ansprüche 1 bis 28,
dadurch gekennzeichnet, daß als Verbindungsmittel zur lösbaren stirnseitigen Verbindung der Wandelemente (2a - g) miteinander Haken (20, 22) vorgesehen sind.

30. Raumtrennwand nach mindestens einem der Ansprüche 1 bis 29,
dadurch gekennzeichnet, daß Verbindungsmittel (16, 18; 20, 22) zur lösbaren stirnseitigen Verbindung der Wandelemente miteinander an den Stirnseiten der Wandelemente (2a - g) angebracht sind.

31. Raumtrennwand nach mindestens einem der Ansprüche 1 bis 30,
dadurch gekennzeichnet, daß die Führungsschiene (4) gerade oder zumindest leicht gekrümmt verläuft.

## Claims

1. Room partition wall comprising movable wall elements (2a - g), the vertical end faces of which can be brought into tight contact with each other or with border elements and which are movable along a first rail (10) and at least along a second rail (4) with the aid of carrying members (6), the first rail (10) branching off from the second rail (4) and there being associated with the first rail (10) a conveying element (12) which is movable and drivable along this first rail and to which there are attached drivers (30) which can be brought into detachable engagement with the carrying members (6) of a wall element to transport the wall element along the first rail (10), and, for the transition of a wall element between the first and the second rail (10, 4), each driver (30) being pivotable towards or away from a carrying member (6) of a wall element located at the branch-off point (34) in order to come into engagement with this carrying member (6) or be detached therefrom, for which purpose the drivers (30) each have an engagement section (32), characterized in that the drivers (30) are arranged on the conveying element (12) in such a way that the engagement section (32) of that driver (30') which is located in the position for engagement with a carrying member (6) of a wall element at the branch-off point (34) always points in the direction of the second rail (4) and, when the conveying element (12) is driven for the transition of a wall element from the first to the second rail (10, 4), each driver (30) is pivotable with its engagement section (32) away from a carrying member (6) of a wall element located at the branch-off point (34) and in the process out of the movement path of this wall element along the second rail (4), in order to be detached from this wall element and not to hinder the movement of the wall element along the second rail (4) following the transition from the first to the second rail (10, 4).

2. Room partition wall according to Claim 1,
characterized in that the movement route of the conveying element (12) upstream of the branch-off point (34) includes a curved section (12b) leading away from this branch-off point and in that the drivers (30) are fixed to the conveying element (12) in a specific position with respect thereto.

3. Room partition wall according to Claim 2,
characterized in that the movement route includes a section (12a) which runs parallel to the first rail (10) and is followed by the curved section (12b).

4. Room partition wall according to Claim 2 or 3,
characterized in that the drivers (30) each have an engagement section (32) which is provided on the side of the drivers which is directed away from the curved section (12b) of the movement route of the conveying element (12).

5. Room partition wall according to at least one of Claims 1 to 4,
characterized in that the drivers (30) are constructed as hookshaped elements which include an engagement section (32), shaped as a concave recess, in order to be able to detachably embrace a section (46), provided for this purpose, of the carrying members (6).

6. Room partition wall according to at least one of Claims 1 to 5,
characterized in that the drivers (30) are attached to the conveying element (12) with their one end (30a) and are provided with the engagement section (32) at their other, free end (30b).

7. Room partition wall according to Claim 6,
characterized in that the drivers (30) are constructed as elongated flat elements.

8. Room partition wall according to Claim 6 or 7,
characterized in that the drivers (30) point, with their free end (30b), in the direction of movement of the conveying element (12) for transporting the wall elements from the first rail (10) to the second rail (4).

9. Room partition wall according to at least one of Claims 1 to 8,
characterized in that the conveying element (12) is an endless element.

10. Room partition wall according to Claims 3 and 9,
characterized in that a deflection roller, about which the endless element (12) turns, is arranged upstream of the branch-off point (34).

11. Room partition wall according to at least one of Claims 1 to 10, in which there is associated with the second rail (4) a second conveying element (50) which is movable and drivable along this second rail and to which there are likewise attached drivers (60) which can be brought into detachable engagement with the carrying members (6) of a wall element to transport the wall element along the second rail (4),
characterized in that the drivers (30) of the first conveying element (12) and the drivers (60) of the second conveying element are arranged and constructed such that in each case one driver (30) of the first conveying element (12) and one driver (60) of the second conveying element (50) can be brought simultaneously into engagement with a carrying member (6) of a wall element located at the branch-off point (34).

12. Room partition wall according to Claim 11,
characterized in that the drivers (30) of the first conveying element (12) and the drivers (60) of the second conveying element (50) are arranged at different heights.

13. Room partition wall according to at least one of Claims 1 to 12,
characterized in that the carrying members (6) of the wall elements are provided with driver pins (46), with which the drivers (30, 60) can be brought into detachable engagement.

14. Room partition wall according to Claims 5 and 13,
characterized in that the driver pins (46) are cylindrically shaped and the engagement sections (32) are constructed as corresponding, approximately semicircular recesses.

15. Room partition wall according to at least one of Claims 1 to 14, having a magazine (8) for parking the wall elements (2e - g),
characterized in that the magazine (8) contains the first rail (10).

16. Room partition wall according to Claim 15, in which the magazine (8) contains, in addition, a third rail (9) which likewise branches off from the second rail (4), the wall elements are each provided with two carrying members (6), the first rail (10) and the third rail (9) are at a distance from each other corresponding to the distance of the two carrying members (6) of the wall elements, and a conveying element (11), likewise having drivers attached thereto, is associated with the third rail (9),
characterized in that the conveying element (11) and the drivers are arranged and constructed in the same manner as the conveying element (12) associated with the first rail (10) and the drivers (30) attached thereto.

17. Room partition wall according to Claim 16,
characterized in that in each case one driver (30) of the conveying element (12) associated with the first rail (10) and one driver of the conveying element (11) associated with the second [sic] rail (9) form a pair with substantially the same distance from the second rail (4).

18. Room partition wall according to Claim 17,
characterized in that the drivers (30) of a pair are pivotable in the same direction.

19. Room partition wall according to Claim 17,
characterized in that the drivers (30) of a pair are pivotable in the opposite direction.

20. Room partition wall according to one of the preceding claims, in which the movable wall elements (2a - g) are movable along a guide rail (4) with their vertical end faces in contact with each other by means of a driving device, the driving device including a drivable endless element (14) which is arranged in or along the guide rail (4) and with which the wall elements (2a to g) can be brought into engagement,
characterized in that the endless element (14) extends only along a limited section of the guide rail (4) and drives a wall element (e.g. 2d) only along this section and in that the wall elements (2a to g) are provided with connecting means (16, 18; 20, 22) for detachably connecting the end faces to each other.

21. Room partition wall according to Claim 20, having a magazine (8) for parking the wall elements (2a - g), where the guide rail (4) runs past the magazine (8),
characterized in that the endless element (14) is arranged in the region of the magazine (8) and is constructed in such a way that it always drives at least the wall element (2d) which has just left the magazine (8) or is about to enter it.

22. Room partition wall according to Claim 21,
characterized in that the endless element (14) extends at least partially over the region of the magazine (8) facing the guide rail (4).

23. Room partition wall according to at least one of Claims 1 to 22,
characterized in that the wall elements (2a - g) each hang on at least two carrying members (6) which are displaceable in the guide rail (4) and rotatable about carrying bolts (5).

24. Room partition wall according to Claims 21 and 23,
characterized in that the magazine (8) includes at least two rails (9, 10) running parallel to each other, which adjoin the guide rail (4) at an angle or transversely and the distance between which is dimensioned in such a way that in each case only one carrying member (6) of one wall element (2e to g) located in the magazine (8) is guided in one of the rails (9, 10).

25. Room partition wall according to Claims 22 and 24,
characterized in that the endless element (14) extends from the guide rail (4) on both sides of the branch-off point (15) of one rail (9).

26. Room partition wall according to at least one of Claims 1 to 25,
characterized in that the connecting means (16, 18) are constructed in such a way that the wall elements (2a to g) are successively connected to each other on leaving the magazine (8) and detached from each other again on entering the magazine (8).

27. Room partition wall according to at least one of Claims 1 to 26,
characterized in that pins (16) and eyes (18) are provided as the connecting means for detachably connecting the end faces of the wall elements to each other, of which in each case one pin (16) on one wall element (e.g. 2e) is aligned with one eye (18) on the adjacent wall element (2d) and can be inserted into the eye (18).

28. Room partition wall according to Claims 26 and 27, in which the wall elements (2e - g) are movable in the magazine (8) at an angle or transversely to the guide rail (4),
characterized in that the pins (16) extend substantially in the direction (A) of the movement of the wall elements (2e - g) in the magazine (8).

29. Room partition wall according to at least one of Claims 1 to 28,
characterized in that hooks (20, 22) are provided as the connecting means for detachably connecting the end faces of the wall elements (2a - g) to each other.

30. Room partition wall according to at least one of Claims 1 to 29,
characterized in that connecting means (16, 18; 20, 22) for detachably connecting the end faces of the wall elements to each other are fitted to the end faces of the wall elements (2a - g).

31. Room partition wall according to at least one of Claims 1 to 30,
characterized in that the guide rail (4) runs straight or at least in a slight curve.

## Revendications

1. Paroi de séparation constituée d'éléments de paroi (2a à g) pouvant être disposés par leurs faces verticales serrés les uns contre les autres ou contre des éléments de fermeture et déplaçables à l'aide d'organes porteurs (6) le long d'un premier rail (10) et au moins le long d'un second rail (4), le premier rail (10) déviant à partir du second rail (4), un élément de transport (12) déplaçable et entraînable le long de ce premier rail (10) étant affecté au premier rail (10) sur lequel sont fixés des taquets d'entraînement (30) qui, pour le transport d'un élément de paroi le long du premier rail (10), peuvent s'engager de manière amovible dans les organes porteurs (6) dudit élément de paroi, chaque taquet d'entraînement (30) pivotant vers un organe porteur (6) - se trouvant au point de déviation (34) - de l'élément de paroi ou en s'en éloignant pour s'engager dans cet organe porteur (6) ou se dégager de ce dernier pour le passage d'un élément de paroi entre le premier et le second rail (10, 4), les taquets d'entraînement (30) présentant respectivement à cet effet une section de contact (32), caractérisée en ce que les taquets d'entraînement (30) sont disposés sur l'élément de transport (12) de telle sorte que la section de contact (32) du taquet d'entraînement (30') qui se trouve au point de déviation (34) en position d'engagement dans un organe porteur (6) d'un élément de paroi, est toujours orientée en direction du second rail (4) et en ce que lors de l'entraînement de l'élément de transport (12) pour le passage d'un élément de paroi du premier au second rail (10. 4), chaque taquet d'entraînement (30) pivote par sa section de contact (32) en s'éloignant d'un organe porteur (6) - se trouvant au point de déviation (34) - d'un élément de paroi et en sortant en même temps de la trajectoire de déplacement de cet élément de paroi le long du second rail (4) pour se dégager de ce dernier et ne pas empêcher le déplacement de l'élément de paroi le long du second rail (4) qui suit le passage du premier au second rail (10, 4).

2. Paroi de séparation selon la revendication 1, caractérisée en ce que la trajectoire de déplacement de l'élément de transport (12) présente avant le point de déviation (34). une section courbe (12b) s'éloignant de ce dernier et en ce que les taquets d'entraînement (30) sont fixés sur l'élément de transport (12) dans une position déterminée par rapport à ce dernier.

3. Paroi de séparation selon la revendication 2, caractérisée en ce que la trajectoire de déplacement présente une section (12a) parallèle au premier rail (10) qui est suivie de la section courbe (12b).

4. Paroi de séparation selon la revendication 2 ou la revendication 3, caractérisée en ce que les taquets d'entraînement (30) possèdent respectivement une section de contact (32) qui est prévue sur le côté du taquet d'entraînement éloigné de la section courbe (12b) de la trajectoire de déplacement de l'élément de transport (12).

5. Paroi de séparation selon au moins l'une quelconque des revendications 1 à 4, caractérisée en ce que les taquets d'entraînement (30) sont constitués par des éléments en forme de crochet qui présentent une section de contact (32) moulée comme évidement concave pour pouvoir entourer de manière amovible une section (46) prévue à cet effet des organes porteurs (6).

6. Paroi de séparation selon au moins l'une quelconque des revendications 1 à 5, caractérisée en ce que les taquets d'entraînement (30) sont fixés par leur extrémité (30a) sur l'élément de transport (12) et sont dotés sur leur autre extrémité libre (30b) de la section de contact (32).

7. Paroi de séparation selon la revendication 6, caractérisée en ce que les taquets d'entraînement (30) sont constitués par des éléments plats longitudinaux.

8. Paroi de séparation selon la revendication 6 ou la revendication 7, caractérisée en ce que les taquets d'entraînement (30) sont orientés par leur extrémité libre (30b) dans le sens de déplacement de l'élément de transport (12) pour le transport des éléments de paroi du premier rail (10) vers le second rail (4).

9. Paroi de séparation selon au moins l'une quelconque des revendications 1 à 8, caractérisée en ce que l'élément de transport (12) est un élément continu.

10. Paroi de séparation selon les revendications 3 et 9, caractérisée en ce qu'un galet de renvoi autour duquel passe l'élément continu (12), est disposé avant le point de déviation (34).

11. Paroi de séparation selon au moins l'une quelconque des revendications 1 à 10, dans laquelle un second élément de transport (50) déplaçable le long du second rail (4), entraînable et sur lequel sont fixés également des taquets d'entraînement (60) qui peuvent s'engager de manière amovible dans les organes porteurs (6) de l'élément de paroi pour le transport d'un élément de paroi le long du second rail (4), est affecté au second rail (4), caractérisée en ce que les taquets d'entraînement (30) du premier élément de transport (12) et les taquets d'entraînement (60) du second élément de transport sont disposés et conçus de telle sorte que respectivement un taquet d'entraînement (30) du premier élément de transport (12) et un taquet d'entraînement (60) du second élément de transport (50) peuvent s'engager simultanément dans un organe porteur (6) - se trouvant au point de déviation (34) - d'un élément de paroi.

12. Paroi de séparation selon la revendication 11, caractérisée en ce que les taquets d'entraînement (30) du premier élément de transport (12) et les taquets d'entraînement (60) du second élément de transport (50) sont disposés à des hauteurs différentes.

13. Paroi de séparation selon au moins l'une quelconque des revendications 1 à 12, caractérisée en ce que les organes porteurs (6) des éléments de paroi sont munis de chevilles d'entraînement (46) dans lesquelles les taquets d'entraînement (30, 60) s'engagent de manière amovible.

14. Paroi de séparation selon les revendications 5 et 13, caractérisée en ce que les chevilles d'entraînement (46) sont moulées en forme de cylindre et en ce que les sections de contact (32) sont conçues comme évidements correspondants, à peu près en demi-cercle.

15. Paroi de séparation selon au moins l'une quelconque des revendications 1 à 14, comportant un magasin (8) pour loger les éléments de paroi (2e à g), caractérisée en ce que le magasin (8) comporte le premier rail (10).

16. Paroi de séparation selon la revendication 15, dans laquelle le magasin (8) comporte en plus un troisième rail (9) déviant également du second rail (4), dans laquelle les éléments de paroi sont respectivement munis de deux organes porteurs (6), dans laquelle le premier rail (10) et le troisième rail (9) sont à une distance l'un de l'autre qui correspond à la distance des deux organes porteurs (6) des éléments de paroi et dans laquelle un élément de transport (11) comportant des taquets d'entraînement fixés également sur ce dernier est affecté au troisième rail (9), caractérisée en ce que l'élément de transport (11) et les taquets d'entraînement sont disposés et conçus de manière identique à l'élément de transport (12) affecté au premier rail (10) et aux taquets d'entraînement (30) fixés sur l'élément de transport (12).

17. Paroi de séparation selon la revendication 16, caractérisée en ce que respectivement un taquet d'entraînement (30) de l'élément de transport (12) affecté au premier rail (10) et un taquet d'entraînement de l'élément de transport (11) affecté au second rail (9) forment une paire présentant essentiellement la même distance par rapport au second rail (4).

18. Paroi de séparation selon la revendication 17, caractérisée en ce que les taquets d'entraînement (30) d'une paire pivotent dans le même sens.

19. Paroi de séparation selon la revendication 17, caractérisée en ce que les taquets d'entraînement (30) d'une paire pivotent en sens contraire.

20. Paroi de séparation selon l'une quelconque des revendications précédentes, dans laquelle les éléments de paroi déplaçables (2a à g) peuvent être déplacés à l'aide d'un dispositif d'entraînement le long d'un rail de guidage (4) avec leurs faces verticales disposées l'une contre l'autre, le dispositif d'entraînement présentant un élément continu (14) entraînable, disposé dans le ou le long du rail de guidage (4) et dans lequel les éléments de paroi (2a à g) peuvent s'engager, caractérisée en ce que l'élément continu (14) ne s'étend que le long d'une section limitée du rail de guidage (4), en ce qu'un élément de paroi (par exemple. 2d) n'entraîne que le long de cette section et en ce que les éléments de paroi (2a à g) sont munis de moyens d'assemblage (16, 18 ; 20, 22) pour leur assemblage amovible entre eux par leurs faces.

21. Paroi de séparation selon la revendication 20, comportant un magasin (8) permettant de loger les éléments de paroi (2a à g). le rail de guidage (4) passant devant le magasin (8), caractérisée en ce que l'élément continu (14) est disposé dans la zone du magasin (8) et conçu de telle sorte qu'il entraîne constamment au moins l'élément de paroi (2d) sorti du magasin (8) ou entrant dans ce dernier.

22. Paroi de séparation selon la revendication 21, caractérisée en ce que l'élément continu (14) s'étend au moins en partie sur la zone du magasin (8) tournée vers le rail de guidage (4).

23. Paroi de séparation selon au moins l'une quelconque des revendications 1 à 22, caractérisée en ce que les éléments de paroi (2a à g) sont suspendus au moins sur deux organes porteurs (6) déplaçables dans le rail de guidage (4) et pivotant autour des boulons portants (5).

24. Paroi de séparation selon les revendications 21 et 23, caractérisée en ce que le magasin (8) présente au moins deux rails (9, 10) parallèles l'un à l'autre, qui sont perpendiculaires ou transversaux au rail de guidage (4) et dont la distance l'un par rapport à l'autre est dimensionnée de telle sorte que respectivement seul un organe porteur (6) d'un élément de paroi (2e à g) se trouvant dans le magasin (8) est guidé dans l'un des rails (9, 10).

25. Paroi de séparation selon les revendications 22 et 24, caractérisée en ce que l'élément continu (14) s'étend des deux côtés du point de déviation (15) d'un rail (9) par rapport au rail de guidage (4).

26. Paroi de séparation selon au moins l'une quelconque des revendications 1 à 25, caractérisée en ce que les moyens d'assemblage (16, 18) sont conçus de telle sorte que les éléments de paroi (2a à g) sont assemblés l'un avec l'autre, successivement lors de la sortie du magasin (8) et sont de nouveau détachés l'un de l'autre lors de l'entrée dans le magasin (8).

27. Paroi de séparation selon au moins l'une quelconque des revendications 1 à 26, caractérisée en ce que l'on prévoit en tant que moyens d'assemblage pour l'assemblage amovible des éléments de paroi entre eux par leurs faces, des chevilles (16) et des oeillets (18) dont respectivement une cheville (16) sur un élément de paroi (par exemple, 2e) est orientée vers un oeillet (18) sur l'élément de paroi (2d) adjacent et peut être enfoncée dans l'oeillet (18).

28. Paroi de séparation selon les revendications 26 et 27, dans laquelle dans le magasin (8), les éléments de paroi (2e à g) sont déplaçables perpendiculairement ou transversalement par rapport au rail de guidage (4), caractérisée en ce que les chevilles (16) s'étendent en substance dans le sens (A) du déplacement des éléments de paroi (2e à g) dans le magasin (8).

29. Paroi de séparation selon au moins l'une quelconque des revendications 1 à 28, caractérisée en ce que des crochets (20, 22) sont prévus comme moyens d'assemblage pour l'assemblage amovible des éléments de paroi (2a à g) entre eux par leurs faces.

30. Paroi de séparation selon au moins l'une quelconque des revendications 1 à 29, caractérisée en ce que des moyens d'assemblage (16, 18 ; 20, 22) prévus pour l'assemblage amovible des éléments de paroi (2a à g) entre eux par leurs faces sont apposés sur les faces des éléments de paroi (2a à g).

31. Paroi de séparation selon au moins l'une quelconque des revendicatios 1 à 30, caractérisée en ce que le rail de guidage (4) est droit ou au moins légèrement courbé.
